# EUROPÄISCHE PATENTSCHRIFT

(11) **EP 1 426 600 B1**
(45) Veröffentlichungstag und Bekanntmachung des Hinweises auf die Patenterteilung: **26.08.2009**
(21) Anmeldenummer: 03023802.6
(22) Anmeldetag: 17.10.2003
(51) Int. Cl.: F02F 1/38, F01N 3/34, F02M 25/07

(54) **Flüssigkeitsgekühlter, gegossener Zylinderkopf einer mehrzylindrigen Brennkraftmaschine**
Casted, liquid-cooled cylinder head of a multi-cylinder internal combustion engine
Culasse moulée, refroidie par liquide, pour un moteur à combustion interne à plusieurs cylindres

(30) Priorität: 06.12.2002 DE 10257064
(43) Veröffentlichungstag der Anmeldung: 09.06.2004
(73) Patentinhaber: Bayerische Motoren Werke Aktiengesellschaft, 80809 München (DE)
(72) Erfinder: Treffler, Karl, 86453 Dasing (DE); Malek, Georg, 81737 München (DE); Temmesfeld, Axel, 83257 Gstadt (DE)

(56) Entgegenhaltungen:
- DE-A- 1 576 779
- DE-A- 3 802 886
- DE-A- 10 040 120
- US-A- 4 119 071
- US-B1- 6 327 853

## Beschreibung

Die Erfindung bezieht sich auf einen flüssigkeitsgekühlten, gegossenen Zylinderkopf einer mehrzylindrigen Brennkraftmaschine, der zumindest über zylinderkopf-bodenseitige Kühlmittelkammern kühlmittelbeaufschlagte, ventilgesteuerte Gaswechselkanäle umfasst, wobei einer die Kühlmittelkammern mindestens abschnittsweise begrenzenden Längsseitenwand des Zylinderkopfes benachbart zugeordnet ein gasführender Längskanal vorgesehen ist mit in vorbestimmten Gaswechselkanälen mündenden Abzweigkanälenund jeder Abzweigkanal in einer den jeweiligen Gaswechselkanal mit der Längsseitenwand bzw. einer Wandung des Längskanals verbindenden, die jeweilige Kühlmittelkammer durchsetzend angeordneten Strebe ausgebildet ist, wobei die zumindest teilweise kühlmittelbeaufschlagte Verbindungs-Strebe mit dem jeweiligen Gaswechselkanal benachbart eines Ventilsitzringes derart in Verbindung steht, dass die Verbindungs-Strebe im wesentlichen in einem diametralen Bereich zu einer einstückigen Anordnung von jeweiligem Gaswechselkanal und einem Aufnahmedom für eine Betriebseinrichtung der Brennkraftmaschine mit dem Gaswechselkanal verbunden ist.

Bei einem aus der DE 39 34 883 A1 bekannten Zylinderkopf ist der für eine Zuführung von Sekundärluft dienende Längskanal der Längsseitenwand benachbart im Zylinderkopf-Boden ausgebildet. Eine Weiterleitung der Sekundärluft zu einem in einen Abgaskanal mündenden Einblasekanal erfolgt über eine Ausnehmung in einer zwischen Zylinderkopf und einem Maschinengehäuse gepresst angeordneten Zylinderkopf-Dichtung. Der Einblasekanal ist als eine Bohrung gestaltet in einem Wandabschnitt des Zylinderkopfes zwischen einer Brennraummulde und einer Kühlmittelkammer. Diese Anordnung ist mehrfach aufwendig.

Eine andere Ausgestaltung eines Kanalsystems für eine Sekundärluftzuführung zeigt und beschreibt die DE-OS 2 259 548, wobei ein Längskanal als einseitig offener Kanal in einer auslassseitigen Längsseitenwand des Zylinderkopfes im Abdeckbereich eines durchgehenden Flansches eines Auspuffkrümmers angeordnet ist und die Sekundärluft über mit dem Längskanal verbundene Stichbohrungen einem jeweiligen Auslasskanal zugeführt ist. Nachteilig hierbei ist die kaum zu beherrschende großflächige Abdichtung.

Weiter sind aus der DE 41 06 499 C1 und der DE-OS 2 222 015 jeweils ein Kanalsystem für eine Sekundärluftzuführung mit einem im Zylinderkopf integriert angeordneten Längskanal mit Abzweigkanälen bekannt, deren jeweilige Ausbildung einer freien Anordnung eines Ventiltriebes entgegenstehen kann.

Dieser Nachteil ist zwar bei dem aus der DE 195 31 875 C1 bekannten Zylinderkopf insofern vermieden, als ein Längskanal für Sekundärluft und ein weiterer Längskanal zur Abgasrückführung eng benachbart in Längsmittenebene des Zylinderkopfes in dessen steuergehäuseseitigen Deckwand angeordnet sind. Gebohrte Einblasekanäle verbinden den einen Längskanal mit Gaswechsel-Einlasskanälen und den anderen Längskanal mit Gaswechsel-Auslasskanälen. Nachteilig hierbei ist die jeweils zusätzliche Gestaltung der jeweiligen Gaswechselkanäle zur Einbringung der in beiden Fällen als Einblaskanäle dienenden Bohrungen. Weiter kompliziert diese bekannte Anordnung von Längskanälen zweier Kanalsysteme für unterschiedliche Zwecke eine Ausbildung von Aufnahmedornen für Zündkerzen oder Einspritzdüsen im Zylinderkopf etwa mittig über dem jeweiligen Brennraum bzw. Zylinder.

Schließlich ist ein Zylinderkopf mit den eingangs beschriebenen Gattungsmerkmalen aus der DE 43 44 356 A1 bekannt mit einer in der weiter vorne angegebenen DE 39 34 883 A1 beschriebenen Art der Sekundärluftzuführung, jedoch mit dem Unterschied, dass der Längskanal mit einem Einblasekanal über eine im Zylinderkopf-Boden zwischengeschaltet angeordnete Ausnehmung in Verbindung steht. Der jeweilige Zylinderkopf des gattungsbildenden Dokumentes ist als Querstrom-Zylinderkopf gestaltet mit der Besonderheit, dass im Gegensatz zu modernen Zylinderköpfen anstelle eines jeweiligen Aufnahmedomes für eine Zündkerze oder eine Einspritzdüse eine weitere Kühlmittelkammer angeordnet ist. Damit verbunden ist für die Ventilsitzringe der ventilgesteuerten Gaswechselkanäle jedes Brennraumes in Kombination mit weiteren, den Gaswechselkanälen benachbarten Kühlmittelräumen eine einigermaßen gleichmäßige Temperaturbelastung mit geringer Verformung der Ventilsitzringe.

Bei einem je Zylinder mehrventilig ausgebildeten Zylinderkopf mit in Querstromanordnung vorgesehenen Gaswechselventilen mit einem etwa mittig angeordneten Aufnahmedom steht dieser mit den zylinderkopfbodennahen Abschnitten der Gaswechselventile in einstückiger Verbindung. Daraus resultiert das bekannte Problem, dass insbesondere bei einem Auslasskanal aufgrund der hohen Temperaturbelastung in dem der einstückigen Verbindung diametralen Bereich des Auslasskanals eine starke Verformung einschließlich des zugehörigen Ventilsitzringes auftritt.

Die US 6,327,853 B1 offenbart einen Zylinderkopf einer Brennkraftmaschine mit den im Oberbegriff des Anspruchs 1 genannten Merkmalen. Anspruch 1 unterscheidet sich dadurch von der US 6,327,853 B1, dass der Längskanal zur Sekundänuftzuführung im Zylinderkopf innerhalb der auslassseitigen Längsseitenwand bodennah angeordnet ist. Der US 6,327,853 B1 zufolge ist ein Kanal zur Sekundärluftzuführung mittels einem im Querschnitt U-förmigen Bauteil gebildet, das an einer Seitenwand des Zylinderkopfes außenseitig angeordnet ist.

Der Erfindung liegt die Aufgabe zugrunde, bei einem gattungsgemäßen Zylinderkopf eine bessere Kühlung der Sekundärluft zu ermöglichen und außerdem einen Sekundärluftzuführungskanal besonders strömungsoptimiert, beispielsweise gekrümmt und/oder mit variierendem Querschnitt, zu gestalten, dabei zugleich die Baubreite des Zylinderkopfes zu verringern, die Herstellbarkeit zu vereinfachen und die Prozesssicherheit bei der Herstellung sowie die Betriebssicherheit zu erhöhen.

Diese Aufgabe ist mit dem Patentanspruch 1 dadurch gelöst, dass eine Querstromanordnung von mehreren Auslasskanälen und Einlasskanälen vorgesehen ist mit im wesentlichen mittiger Anordnung eines Aufnahmedomes je Zylinder der Brennkraftmaschine und ein der Sekundärluftzuführung dienender Längskanal im Zylinderkopf innerhalb der auslassseitigen Längsseitenwand des Zylinderkopfes bodennah benachbart angeordnet ist.

Der erfindungsgemäße Zylinderkopf-baut schmaler, zusätzliche Montageschritte sowie eine Dichtung zwischen Zylinderkopf und Kanalbauteil entfallen und der Sekundärluftzuführungskanal kann auf besonders vorteilhafte Weise strömungsoptimiert gestaltet werden. Außerdem wird die Sekundärluft aufgrund der Nähe des Sekundärluftzuführungskanals zu den Kühlmittelkammern gekühlt.

Für einen beispielsweise aus der DE 38 19 655 C1 bekannten Zylinderkopf mit einer Querstromanordnung von mehreren Auslasskanälen und Einlasskanälen mit im wesentlichen mittiger Anordnung eines Aufnahmedomes je Zylinder einer Brennkraftmaschine ist zur Erzielung einer steifen Struktur bei intensiver Wärmeableitung aus der jeweiligen Verbindungs-Strebe vorgeschlagen, einen der Sekundärluftzuführung dienenden Längskanal der auslassseitigen Längsseitenwand des Zylinderkopfes bodennah benachbart zuzuordnen, wobei die je einen Abzweigkanal aufweisenden Verbindungs-Streben zu den Auslasskanälen in der jeweiligen Kühlmittelkammer jeweils wenigstens abschnittsweise einen Durchflussquerschnitt mit dem Zylinderkopfboden und ggf. einen Durchflussquerschnitt mit der Kanalwand des jeweiligen Auslasskanals begrenzen.

Weiter ist mit der Erfindung die Steifigkeit der Zylinderkopf-Struktur dadurch gesteigert, dass die Verbindungs-Streben mit der Wandung des Sekundärluft-Längskanals jeweils über einen mit der Hauptachse zum Längskanal quergerichteten Querschnitt anschließend ausgebildet sind, und dass die Verbindungs-Streben über einen demgegenüber sich abflachenden Querschnitt mit der Kanalwand des jeweiligen Auslasskanals sich über einen vorbestimmten Umfangsabschnitt im jeweiligen diametralen Bereich erstreckend in einstückiger Verbindung stehen.

Zur Erzielung einer wirkungsvollen Einblasung von Sekundärluft ist jeder stromab des Ventilsitzringes benachbart an der Kanalinnenseite des Auslasskanals mündende Abzweigkanal stromauf seiner Mündung düsenartig gestaltet.

Die Erfindung ist gemäß einem weiteren Vorschlag auch für ein einer Abgasrückführung dienendes Kanalsystem dienlich, des weiteren lassen sich beide Kanalsysteme in einem Zylinderkopf verwirklichen.

Schließlich bezieht sich ein erfindungsgemäßer Vorschlag darauf, dass der Längskanal bzw. seine gegen Übersprechen vorgesehenen Abschnitte mit den zugehörigen Abzweigkanälen in dem mittels eines Gießverfahrens gefertigten Zylinderkopf jeweils mittels eines Gießkernes gebildet sind, wobei Verlängerungen an den Gießkernen der Abzweigkanäle einem lagesichernden Eingriff in Ausnehmungen von Gießkernen der Gaswechselkanäle dienen.

Diese mehrteilige Kernausbildung ermöglicht gegenüber einer aus der DE 196 35 535 C2 bekannten einteiligen Kerngestaltung, wobei Gießkerne für Längskanal und Abzweigkanäle mit Gießkernen der Auslasskanäle einteilig ausgebildet sind, eine einfachere Handhabung.

Die Erfindung ist anhand eines in der Zeichnung gezeigten Ausführungsbeispiels beschrieben. Es zeigt
- Fig.1: einen abschnittsweisen Querschnitt durch einen Zylinderkopf,
- Fig.2: einen abschnittsweisen Längsschnitt durch den Zylinderkopf auf Höhe der der Kanäle für eine Sekundärluft-Zuführung.

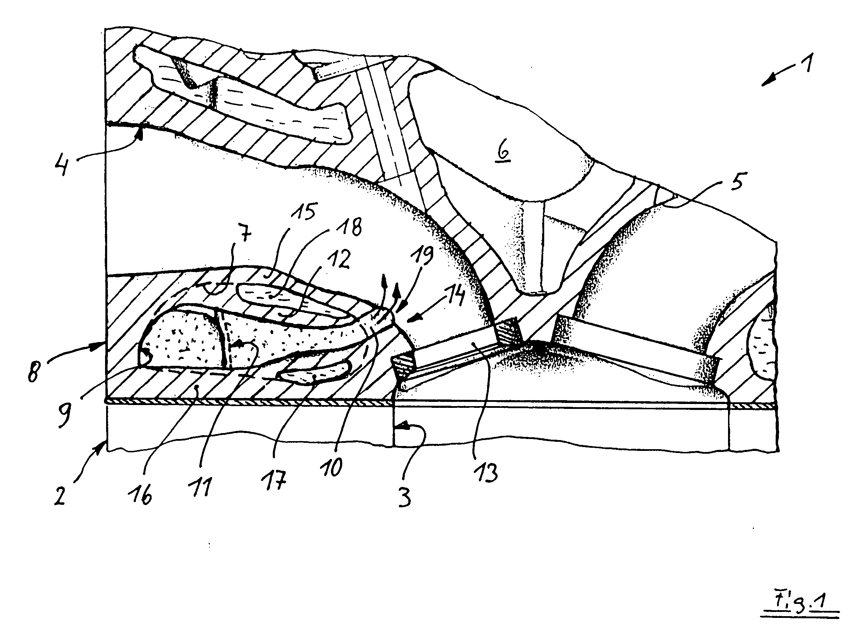

Ein flüssigkeitsgekühlter, gegossener Zylinderkopf 1 einer mehrzylindrigen, nicht näher gezeigten Brennkraftmaschine 2 umfasst je Zylinder 3 der Brennkraftmaschine 2 mehrere Auslasskanäle 4 und Einlasskanäle 5 in Querstromanordnung mit einer im wesentlichen mittigen Anordnung eines Aufnahmedomes 6 für eine Zündkerze oder einer Einspritzdüse als Betriebseinrichtung der Brennkraftmaschine 2 . Wie aus Fig.1 ersichtlich, ist der ventilgesteuerte Gaswechsel-Auslasskanal 4 über eine zylinderkopf-bodenseitige Kühlmittelkammer 7 kühlmittelbeaufschlagt, wobei einer die Kühlmittelkammer 7 abschnittsweise begrenzenden Längsseitenwand 8 des Zylinderkopfes 1 benachbart zugeordnet ein der Zuführung von Sekundärluft dienender Längskanal 9 vorgesehen ist mit einem in den Auslasskanal 4 mündenden Abzweigkanal 10.

Erfindungsgemäß ist der Abzweigkanal 10 in einer den Auslasskanal 4 mit der Längsseitenwand 8 bzw. einer Wandung 11 des Längskanals 9 verbindenden , die Kühlmittelkammer 7 durchsetzend angeordneten Strebe 12 ausgebildet. Die erfindungsgemäß kühlmittelbeaufschlagt angeordnete Verbindungs-Strebe 12 steht mit dem Auslasskanal 4 benachbart eines zugehörigen Ventilsitzringes 13 derart in Verbindung, dass die Verbindungs-Strebe 12 in einem diametralen Bereich 14 gegenüber einer einstückigen Anordnung des Auslasskanals 4 mit dem Aufnahmedom 6 mit der Kanalwand 15 des Auslasskanals 4 einstückig verbunden ist.

Weiter ist aus Fig.1 ersichtlich, dass der Längskanal 9 entlang der auslaßseitigen Längsseitenwand 8 auf dem Zylinderkopf-Boden 16 verlaufend angeordnet ist, wobei die einen Abzweigkanal 10 aufweisende Verbindungs-Strebe 12 zum bodenseitigen Abschnitt des Auslasskanals 4 in der Kühlmittelkammer 7 ansteigend ausgebildet ist und sowohl mit dem Zylinderkopf-Boden 16 einen Kühlmittel-Durchflussquerschnitt 17 als auch mit der Kanalwand 15 einen Kühlmittel-Durchflussquerschnitt 18 begrenzt.

Zur Erzielung steifer Anbindungen der Verbindungs-Strebe 12 in ihren beiden Endbereichen steht diese mit der Wandung 11 des Längskanals 9 über einen mit der Hauptachse zum Längskanal 9 quergerichteten Querschnitt, d.h. mit einem hochkant ausgerichteten Querschnitt in Verbindung. Gegenüber diesem Hochkant-Querschnitt schließt die Verbindungs-Strebe 12 mittels eines Flachkant-Querschnittes an der Kanalwand 15 des Auslasskanals 4 an, um mit der Kanalwand 15 über einen vorbestimmten Umfangsabschnitt im diametralen Bereich in einstückiger Verbindung zu stehen.

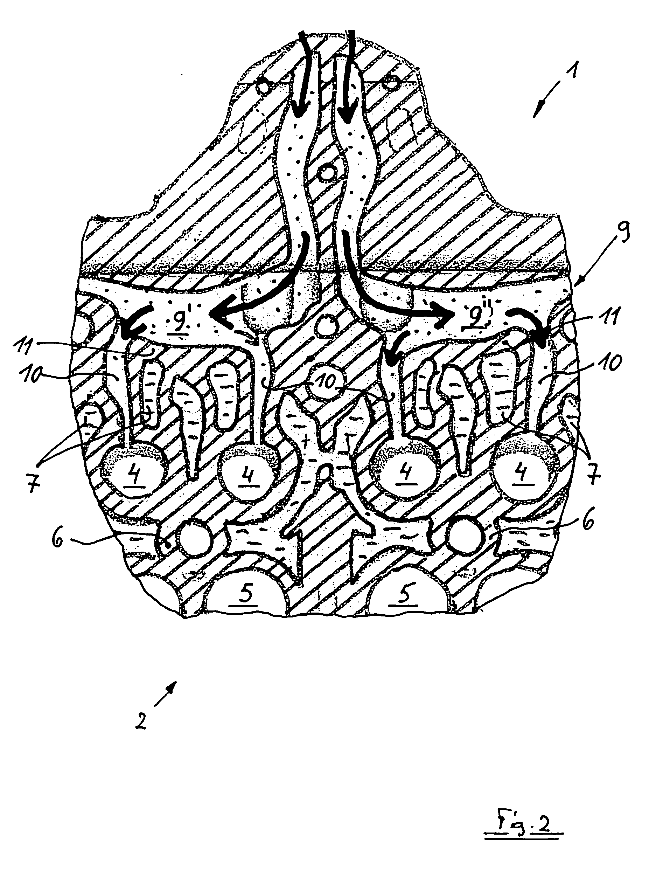

Wie aus Figur 2 erkennbar, ist der Längskanal 9 der mehrzylindrigen Brennkraftmaschine 2 zur Vermeidung eines Übersprechens zwischen den Zylindern 3 in Abschnitte 9'und 9" unterteilt, wobei jeder Abschnitt 9' , 9" von einer gemeinsamen, nicht gezeigten Luftpumpe jeweils ventilgesteuert mit Sekundärluft versorgt ist

Zur Erzielung einer wirkungsvollen Sekundärluft-Einblasung ist der stromab des Ventilsitzringes 13 benachbart an der Kanalinnenseite des Auslasskanals 4 mündende Abzweigkanal 10 stromauf seiner Mündung 19 düsenartig gestaltet.

Schließlich erlaubt die Erfindung durch eine gesonderte oder zusätzliche Verwendung eines Längskanals mit in Gaswechsel-Einlasskanälen mündenden Abzweigkanälen eine ansaugluftseitige Anordnung einer Abgasrückführeinrichtung im Zylinderkopf oder die gemeinsame Anordnung einer Sekundärluftzuführung und einer Abgasrückführeinrichtung in einem Zylinderkopf 1.

Längskanal 9 bzw. seine Abschnitte 9' und 9" sowie die Abzweigkanäle10 können durch Bohren im gegossenen Zylinderkopf 1 hergestellt sein mit erheblichem Aufwand an zusätzlichen Nacharbeiten. Demgegenüber vorteilhafter erscheint es, dass der Längskanal 9 bzw. seine Abschnitte 9',9" mit den zugehörigen Abzweigkanälen 10 in dem mittels eines Gießverfahrens gefertigten Zylinderkopf 1 jeweils mittels eines Gießkernes gebildet sind, wobei Verlängerungen an den Gießkernen der Abzweigkanäle 10 einem lagesichernden Eingriff in Ausnehmungen von Gießkernen der Gaswechselkanäle 4,5 dienen. Mit dem einteilig ausgebildeten Gießkern für Längskanal 9 und Abzweigkanälen 10 ist gegenüber der aus der bereits weiter vorne genannten DE 196 35 535 C2 bekannten, die Gießkerne vorbestimmter Gaswechselkanäle mitumfassenden Ausgestaltung eine einfachere Handhabung gegeben.

Mit der vorbeschriebenen Erfindung ist in vorteilhafter Weise die Aufgabe gelöst, bei einem Querstrom-Zylinderkopf 1 mit Anordnung eines mit ventilgesteuerten Gaswechselkanälen 4 , 5 einstückig verbundenen Aufnahmedomes 6 für Betriebseinrichtungen der Brennkraftmaschine 2 das einer Gaszuführung dienende Kanalsystem aus einem Längskanal und Abzweigkanälen derart strukturell anzuordnen und auszubilden, dass eine Verformung des jeweiligen Gaswechselkanals einschließlich eines zugehörigen Ventilsitzringes zumindest wesentlich reduziert ist.

## Patentansprüche

1. Flüssigkeitsgekühlter, gegossener Zylinderkopf einer mehrzylindrigen Brennkraftmaschine,
- der zumindest über zylinderkopf-bodenseitige Kühlmittelkammern (7) kühlmittelbeaufschlagte, ventilgesteuerte Gaswechselkanäle (4,5) umfasst, wobei
- einer die Kühlmittelkammern (7) mindestens abschnittsweise begrenzenden Längsseitenwand (8) des Zylinderkopfes (1) benachbart zugeordnet ein gasführender Längskanal (9) vorgesehen ist mit in vorbestimmten Gaswechselkanälen (4,5) mündenden Abzweigkanälen (10) und
- jeder Abzweigkanal (10) in einer den jeweiligen Gaswechselkanal (4,5) mit der Längsseitenwand (8) bzw. einer Wandung (11) des Längskanals (9) verbindenden, die jeweilige Kühlmittelkammer (7) durchsetzend angeordneten Strebe (12) ausgebildet ist, wobei
- die zumindest teilweise kühlmittelbeaufschlagte Verbindungs-Strebe (12) mit dem jeweiligen Gaswechselkanal (4,5) benachbart eines Ventilsitzringes (13) derart in Verbindung steht, dass
- die Verbindungs-Strebe (12) im wesentlichen in einem diametralen Bereich zu einer einstückigen Anordnung von jeweiligem Gaswechselkanal (4,5) und einem Aufnahmedom (6) für eine Betriebseinrichtung der Brennkraftmaschine (2) mit dem Gaswechselkanal (4,5) verbunden ist,
**dadurch gekennzeichnet, dass**
- eine Querstromanordnung von mehreren Auslasskanälen (4) und Einlasskanälen (5) vorgesehen ist, mit im wesentlichen mittiger Anordnung eines Aufnahmedomes (6) je Zylinder (3) der Brennkraftmaschine und (2) ein der Sekundärluftzuführung dienender Längskanal (9) im Zylinderkopf (1) innerhalb der auslassseitigen Längsseitenwand (8) des Zylinderkopfes (1) bodennah benachbart angeordnet ist.

2. Zylinderkopf nach Anspruch 1, **dadurch gekennzeichnet, dass**
- die je einen Abzweigkanal (10) aufweisenden Verbindungs-Streben (12) zu den Auslasskanälen (4) in der jeweiligen Kühlmittelkammer (7) jeweils wenigstens abschnittsweise einen Durchflussquerschnitt (17) mit dem Zylinderkopf-Boden (16) und ggf. einen Durchflussquerschnitt (18) mit der Kanalwand (15) des jeweiligen Auslasskanals (4) begrenzen.

3. Zylinderkopf nach Anspruch 1 und 2, **dadurch gekennzeichnet,**
- **dass** die Verbindungs-Streben (12) mit der Wandung (11) des Längskanals (9) jeweils über einen mit der Hauptachse zum Längskanal (9) quergerichteten Querschnitt anschließend ausgebildet sind, und
- **dass** die Verbindungs-Streben (12) über einen demgegenüber sich abflachenden Querschnitt mit der Kanalwand (15) des jeweiligen Auslasskanals (4) sich über einen vorbestimmten Umfangsabschnitt im jeweiligen diametralen Bereich (14) erstreckend in einstückiger Verbindung stehen.

4. Zylinderkopf nach den Ansprüchen 1-3, **dadurch gekennzeichnet,**
- **dass** der Längskanal (9) entsprechend einer mehrzylindrigen Brennkraftmaschine (2) in gesonderte, ventilgesteuert mit Sekundärluft versorgte Abschnitte (9',9") unterteilt ist.

5. Zylinderkopf nach den Ansprüchen 1-4, **dadurch gekennzeichnet,**
- **dass** jeder stromab des Ventilsitzringes (13) benachbart an der Kanalinnenseite des Auslasskanals (4) mündende Abzweigkanal (10) stromauf seiner Mündung (19) düsenartig gestaltet ist.

6. Zylinderkopf nach einem oder mehreren der Ansprüche 1-5, **gekennzeichnet durch** eine gesonderte oder zusätzliche Verwendung eines Längskanals (9) mit in Gaswechsel-Einlasskanälen (5) mündenden Abzweigkanälen für eine der Brennkraftmaschine (2) zugeordnete Abgasrückführeinrichtung.

7. Verfahren zur Herstellung eines Zylinderkopfes nach einem der Ansprüche 1-6, **dadurch gekennzeichnet,**
- **dass** der Längskanal (9) bzw. seine Abschnitte (9',9") mit den zugehörigen Abzweigkanälen (10) in dem mittels eines Giessverfahrens gefertigten Zylinderkopf (1) mit den Merkmalen gemäß einem der Ansprüche 1-6 jeweils mittels eines Giesskernes hergestellt werden,
- wobei Verlängerungen an den Giesskemen der Abzweigkanäle (10) einem lagesichernden Eingriff in Ausnehmungen von Giesskernen der Gaswechselkanäle (4,5) dienen.

## Claims

1. A liquid-cooled, cast cylinder head of a multi-cylinder internal combustion engine,
- which at least comprises valve-controlled gas exchange channels (4, 5) loaded with coolant by means of coolant chambers (7) on the cylinder head base side, wherein
- a gas-conducting longitudinal channel (9) is provided associated adjacently with a longitudinal side wall (8) of the cylinder head (1) delimiting the coolant chambers (7) at least in sections, with branch-off channels (10) opening into predetermined gas exchange channels (4, 5) and
- each branch-off channel (10) is configured in a strut (12) connecting the respective gas exchange channel (4, 5) to the longitudinal side wall (8) or a wall (11) of the longitudinal channel (9), and arranged passing through the respective coolant chamber (7), wherein
- the connection strut (12) at least partially loaded by coolant is connected to the respective gas exchange channel (4, 5) adjacent to a valve seat ring (13) in such a way that
- the connection strut (12) is substantially connected, in a diametrical region to a one-piece arrangement of the respective gas exchange channel (4, 5) and a receiving dome (6) for an operating device of the internal combustion engine (2), to the gas exchange channel (4, 5),
**characterised in that**
- a transverse flow arrangement of a plurality of outlet channels (4) and inlet channels (5) is provided with a substantially central arrangement of a receiving dome (6) per cylinder (3) of the internal combustion engine (2) and a longitudinal channel (9) being used for the secondary air supply is arranged adjacently close to the base in the cylinder head (1) within the outlet-side longitudinal side wall (8) of the cylinder head (1).

2. A cylinder head according to claim 1, **characterised in that**
- the connection struts (12), which each have a branch-off channel (10) to the outlet channels (4) in the respective coolant chamber (7) in each case delimit, at least in sections, a through-flow cross section (17) with the cylinder head base (16) and optionally a through-flow cross section (18) with the channel wall (15) of the respective outlet channel (4).

3. A cylinder head according to claim 1 to 2, **characterised in that**
- the connection struts (12) are configured adjacent to the wall (11) of the longitudinal channel (9) in each case via a cross section directed transversely with the main axis to the longitudinal channel (9), and
- **in that** the connection struts (12) are in integral connection via a comparatively flattening cross section to the channel wall (15) of the respective outlet channel (4), extending over a predetermined peripheral section in the respectively diametrical region (14).

4. A cylinder head according to any one of claims 1 to 3, **characterised in that**
- the longitudinal channel (9) is divided, in accordance with a multi-cylinder internal combustion engine (2), into separate sections (9', 9") supplied in a valve-controlled manner with secondary air.

5. A cylinder head according to any one of claims 1 to 4, **characterised in that**
- each branch-off channel (10) opening downstream of the valve seat ring (13) adjacent to the channel inner side of the outlet channel (4) is formed in a nozzle-like manner upstream of its mouth (19).

6. A cylinder head according to any one or more of claims 1 to 5, **characterised by** a separate or additional use of a longitudinal channel (9) with branch-off channels opening into gas exchange inlet channels (5), for an exhaust gas return device associated with the internal combustion engine (2).

7. A method for producing a cylinder head according to any one of claims 1 to 6, **characterised in that**
- the longitudinal channel (9) or its sections (9', 9") with the associated branch-off channels (10) are produced in the cylinder head (1) manufactured by means of a casting method and with the features according to any one of claims 1 to 6, in each case by means of a casting core,
- wherein extensions on the casting cores of the branch-off channels (10) are used for a position-securing engagement in recesses of casting cores of the gas exchange channels (4, 5).

## Revendications

1. Culasse obtenue par coulée, refroidie par un liquide dans un moteur à combustion à plusieurs cylindres, comprenant :
- des canaux d'échange de gaz (4, 5) commandés par des soupapes, sollicités par le liquide de refroidissement au moins par des chambres de liquide de refroidissement (7) du côté du fond de la culasse,
- un canal longitudinal (9) de gaz, associé au voisinage des chambres de liquide de refroidissement (7), à une paroi latérale longitudinale (8) de la culasse (1) qui délimite au moins par segments les chambres de liquide de refroidissement (7), et ce canal a des canaux de dérivation (10) débouchant dans des canaux d'échange de gaz (4, 5) prédéfinis,
- chaque canal de dérivation (10) est réalisé dans l'entretoise (12) respective installée de façon à traverser la chambre de fluide de refroidissement (7), respective, cette entretoise reliant le canal d'échange de gaz (4, 5) respectif à la paroi longitudinale (8) ou à une paroi (11) du canal longitudinal (9), et
- au moins l'entretoise de liaison (12) sollicitée au moins en partie par le fluide de refroidissement, coopère avec le canal d'échange de gaz (4, 5) respectif, voisin d'un anneau formant siège de soupape (13) de façon que
- l'entretoise de liaison (12) soit reliée pratiquement dans une zone diamétrale pour former un dispositif en une seule pièce avec le canal d'échange de gaz (4, 5) et un dôme de réception (6) pour une installation de fonctionnement du moteur à combustion interne (2) avec le canal d'échange de gaz (4, 5),
**caractérisée en ce qu'**
un dispositif d'écoulement transversal formé de plusieurs canaux de d'échappement (4) et de canaux d'admission (5) est prévu avec une disposition pratiquement centrale d'un dôme de réception (6) par cylindre (3) du moteur à combustion interne (2) et un canal longitudinal (9) servant à l'alimentation en air secondaire est prévu dans la culasse (1) à l'intérieur de la paroi latérale longitudinale (8) côté sortie, à proximité du fond de la culasse (1).

2. Culasse selon la revendication 1,
**caractérisée en ce que**
les entretoises de liaison (12) ayant chacune un canal de dérivation (10) vers les canaux d'échappement (4) dans la chambre d'agent de refroidissement (7) respective, délimitent chaque fois, au moins par segment, une section de passage (17) avec le fond (16) de la culasse et le cas échéant une section de passage (18) avec la paroi (15) du canal d'échappement (4) respectif.

3. Culasse selon les revendications 1 et 2,
**caractérisée en ce que**
- les entretoises de liaison (12) sont réalisées avec la paroi (11) du canal longitudinal (9) chaque fois de façon adjacente avec une section dont l'axe principal est dirigé transversalement par rapport au canal longitudinal (9),
- les entretoises de liaison (12) sont reliées par une liaison en une seule pièce s'étendant sur un segment périphérique prédéterminé dans la zone radiale respective (14) avec une section aplatie avec la paroi (15) du canal d'échappement respectif (4).

4. Culasse selon les revendications 1 à 3,
**caractérisée en ce que**
le canal longitudinal (9) est subdivisé en fonction d'un moteur à combustion interne à plusieurs cylindres (2), en segments particuliers (9', 9") commandés par des soupapes et assurant l'alimentation en air secondaire.

5. Culasse selon l'une des revendications 1 à 4,
**caractérisée en ce que**
chaque canal de dérivation (10) qui débouche en aval de la bague formant le siège de soupape (13) au voisinage du côté intérieur du canal d'échappement (4), a une embouchure (19) en forme de buse.

6. Culasse selon l'une ou plusieurs des revendications 1 à 5,
**caractérisée par**
une utilisation particulière ou supplémentaire d'un canal longitudinal (9) avec des canaux de dérivation débouchant dans les canaux d'admission (5) d'échange de gaz pour une installation de recyclage des gaz d'échappement associée à un moteur à combustion interne (2).

7. Procédé de fabrication d'une culasse selon l'une des revendications 1 à 6,
**caractérisé en ce qu'**
- on réalise le canal longitudinal (9) ou ses segments (9', 9") avec les canaux de dérivation (10) associés dans la culasse (1) fabriquée par un procédé de coulée, ayant les caractéristiques selon l'une des revendications 1 à 6, avec chaque fois un noyau de coulé,
- des prolongements des noyaux de fonderie des canaux de déviation (10) servent à garantir la position dans les cavités des noyaux de fonderie des canaux d'échange de gaz (4, 5).
